**Europäisches Patentamt**

**European Patent Office**

**Office européen des brevets**

(19)

(11) Numéro de publication: **0 035 923**
**B1**

(12) **FASCICULE DE BREVET EUROPEEN**

(45) Date de publication du fascicule du brevet: **20.06.84**

(51) Int. Cl.³: **A 01 D 90/08**

(21) Numéro de dépôt: **81400249.9**

(22) Date de dépôt: **18.02.81**

(54) **Dispositif de ramassage, chargement et déchargement de bottes de paille ou fourrage associé à un véhicule.**

(30) Priorité: **28.02.80 FR 8004459**

(43) Date de publication de la demande:
**16.09.81 Bulletin 81/37**

(45) Mention de la délivrance du brevet:
**20.06.84 Bulletin 84/25**

(84) Etats contractants désignés:
**AT BE CH DE FR GB IT LI LU NL SE**

(56) Documents cités:
**FR - A - 2 285 801**
**FR - A - 2 326 859**

(73) Titulaire: **Valiorgue, Bernard**
**Résidence "Le Parc" 3 rue Antoine Martin**
**F-43000 Le Puy (Haute Loire) (FR)**

(72) Inventeur: **Valiorgue, Bernard**
**Résidence "Le Parc" 3, rue Antoine Martin**
**F-43000 Le Puy (Haute-Loire) (FR)**
Inventeur: **Audureau, Bernard**
**La Copechagniere**
**F-85260 l'Herbergement (Vendée) (FR)**

(74) Mandataire: **Ducas, Michel Louis Marie et al,**
**Cabinet Boettcher 23, rue La Boétie**
**F-75008 Paris (FR)**

Courier Press, Leamington Spa, England.

## Description

L'invention concerne un dispositif de ramassage et chargement sur un véhicule et de déchargement de ce véhicule de bottes parallélépipédiques de paille ou de fourrage comportant un couloir longitudinal fixé latéralement au véhicule et au voisinage du sol et s'étendant substantiellement sur la longueur utile du véhicule.

Pour résoudre le problème du ramassage sur un champ ou une prairie de bottes de paille parallélépipédiques, on a déjà proposé de nombreux appareils ou dispositifs comprenant des mécanismes compliqués de rangement et de distribution plus ou moins automatisés des bottes. Beaucoup de ces appareils sont munis de mécanismes comportant des séparateurs, des poussoirs, des volets ou des rampes, tous mécanismes sujets à des incidents de fonctionnement et/ou faisant perdre de la place dans le véhicule de chargement. Pour tous ces dispositifs ou appareils, il est nécessaire de construire un véhicule spécial, d'où immobilisation coûteuse.

On a déjà proposé dans le US—A—3 952 881 un dispositif du type rappelé au début, dans lequel l'ensemble du couloir est constitué en grue. Ce dispositif présente deux inconvénients, à savoir son incapacité à servir au déchargement et l'impossibilité de munir le véhicule de ridelles, ce qui oblige à le charger en pyramide et fait donc perdre la moitié de la capacité de chargement de ce véhicule. On a également proposé par le brevet US 4 015 726 une grue à deux bras, sans couloir, qui présente les mêmes inconvénients que le US—A—3 952 881 précité.

Le FR—A—2 285 801 décrit un véhicule équipé d'une grue à griffes capable de saisir des bottes une par une directement sur le sol et de les ranger en lits successifs dans ce véhicule. Il ne peut déplacer les bottes qu'une seule à la fois et, pour qu'il puisse les saisir sur le sol, il faut que chaque botte soit mise à une position fixe précise définie par une antenne de chargement dirigée vers le sol.

Le FR—A—2 326 859 décrit un véhicule le long duquel est disposé un berceau ouvert à l'avant qui se remplit d'un rang de plusieurs bottes successives du seul fait du déplacement du véhicule et du berceau. La totalité de ce berceau ou au moins son fond, peuvent être soulevés par un mouvement d'élévation et de pivotement jusqu'au-dessus du véhicule où les bottes tombent librement et s'accumulent en vrac. Cet engin ramasse et décharge les bottes plus rapidement que celui du FR—A—2 285 801 puisqu'il travaille par rangs entiers, mais il ne comporte pas de moyens de déchargement à action méthodique.

Le but principal de l'invention est d'apporter un véhicule équipé d'un moyen de ramassage permettant de constituer facilement un rang entier de bottes, de charger méthodiquement dans le véhicule chaque range entier, dans le plus petit volume nécessaire, de décharger aussi méthodiquement chacun de ces rangs hors du véhicule dans un temps réduit.

Il devient alors possible d'atteindre un but secondaire de l'invention consistant à pouvoir décharger automatiquement, sans intervention manuelle, un véhicule chargé, de manière rapide, en procédant par rangs successifs entiers pour alimenter un convoyeur ou un élévateur.

On réalise la combinaison d'un véhicule ayant un châssis, d'un couloir réuni à ce châssis pour s'étendre parallèlement au véhicule sur la longueur de celui-ci et pour présenter une entrée libre évasée et une ouverture supérieure libre, d'un moyen de chargement qui, selon l'invention est une grue supportée par le châssis du véhicule munie d'un moyen de saisie apte à saisir un rang complet de bottes se trouvant dans le couloir ou sur le véhicule, cette grue ayant une flèche inclinable en sens transversal et en sens longitudinal pour que le moyen de saisie reste parallèle à lui-même pendant ses déplacements.

Non seulement on peut, de cette façon, charger méthodiquement et rang par rang, le véhicule à partir du couloir mais on peut aussi, en munissant le couloir d'un fond constitué par un transporteur longitudinal et en supprimant ou en rendant escamotable la butée arrière de ce couloir, décharger automatiquement et méthodiquement, toujours rang entier par rang entier, le contenu de véhicule pour alimenter un appareil quelconque, par exemple grâce à des moyens de programmation.

De préférence, la grue est supportée par le châssis au moyen d'un support transversal qui permet son déplacement par coulissement en sens transversal et, de préférence encore, ce support transversal a une extrémité munie d'une béquille escamotable.

Il est avantageux que le couloir soit supporté par le châssis à l'aide d'un moyen autorisant un réglage de position en hauteur au-dessus du sol, quand le couloir a un transporteur sans fin en guise de fond, afin qu'il puisse plus aisément alimenter un autre convoyeur ou un élévateur de bottes.

Il est préférable que le moyen de saisie qui équipe la grue possède des griffes pivotantes commandées par un vérin au moins afin de pouvoir saisir les bottes d'un même rang par leurs liens, ce qui permet leur préhension par leur face extérieure seule.

D'autres avantages et particularités de l'invention ressortiront de la description, qui sera donnée ci-après uniquement à titre d'exemple, d'un mode de réalisation de l'invention. On se reportera à cet effet aux dessins annexés, dans lesquels:

— la figure 1 est une vue latérale d'une remorque équipée du dispositif de l'invention,

— la figure 2 est une vue de face de la remorque de la figure 1,

— la figure 3 est une vue en perspective montrant une variante du dispositif avec la grue à déplacement transversal,

— la figure 4 est une vue en perspective montrant une autre variant du dispositif avec transporteur longitudinal.

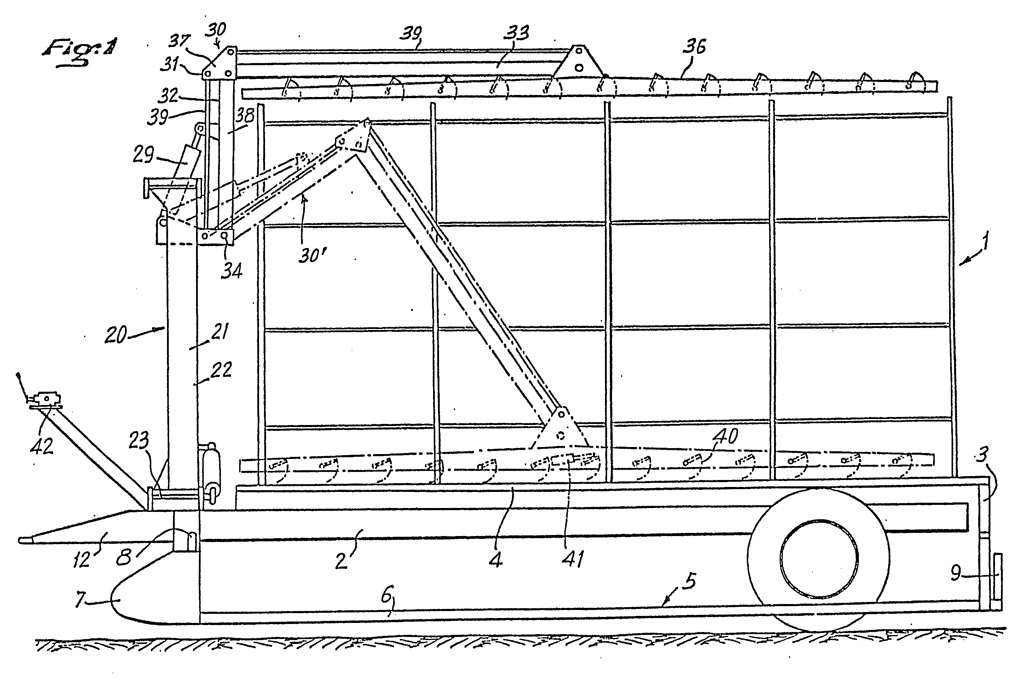

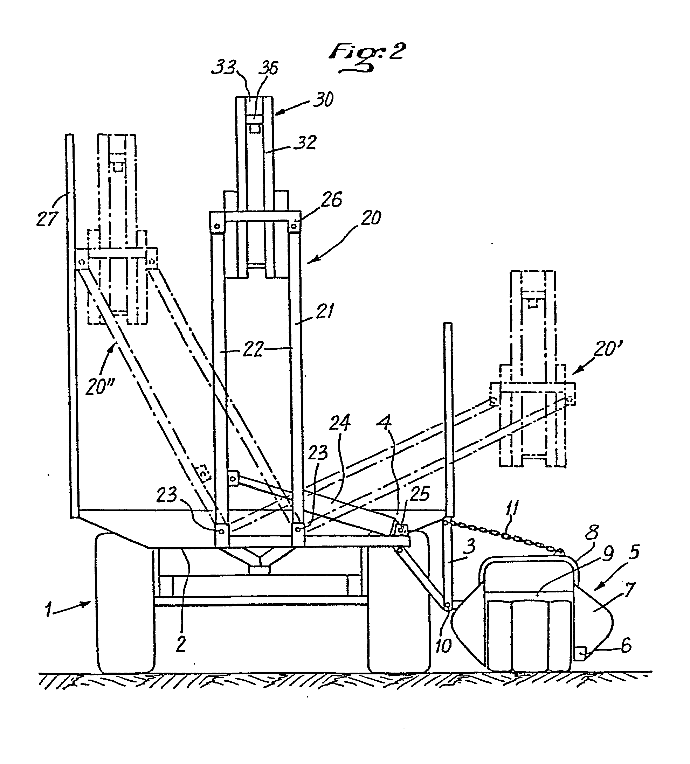

On décrira d'abord l'ensemble représenté aux figures 1 et 2.

Sous le châssis 2 d'une remorque 1 à plateau 4 et à ridelles ou échelettes 27 et 28, on fixe, d'un côté, deux éléments de console 3 disposés respectivement à l'avant et à l'arrière du châssis. Sur ces éléments de console 3, qui s'étendent sensiblement à la verticale du bord du plateau 4, on fixe un couloir désigné dans son ensemble par 5. Ce couloir est constitué par deux barres maintenues près du sol, comme il sera exposé, parallèles au véhicule et écartées mutuellement d'une largeur de botte. Les deux barres 6 portent, à l'extrémité avant, un sabot 7, les deux sabots 7 divergeant pour présenter une entrée évasée du couloir. Les barres 6 sont solidarisées, à l'avant, par une barre arquée 8 réunissant les sabots 7 en pont laissant le passage libre pour les bottes et à l'arrière par une plaque de butée 9; de cette façon, le couloir qui est sans fond est entièrement libre d'obstacle supérieur à la prise des bottes par le haut. Le couloir 5 est monté pivotant sur les deux consoles 3 autour d'un axe longitudinal 10, de façon à pouvoir s'escamoter sous le plateau 4. Des chaînes de sécurité 11 sont prévues pour retenir le couloir en position d'utilisation représentée sur les figures ou en position escamotée.

Le timon 12 de la remorque 1 porte une grue désignée dans son ensemble par 20. Cette grue comporte une flèche 21 constitué par deux montants 22 assemblés en parallélogramme déformable d'axes longitudinaux 23 commandable par un vérin transversal 24 agissant entre un pivot 25 porté latéralement par le timon 12. La flèche 21 peut s'incliner transversalement, par pivotement autour des axes 23 de sorte que sa tête 26 surmonte tout point quelconque de la section transversale de la remorque ainsi que le couloir 5, dans sa position la plus inclinée.

La flèche 21 porte, à sa partie supérieure, un bras 30 oscillant autour d'un axe 34 articulé en 31 et comportant donc un bras proprement dit 32 et un avantbras 33 commandés par un vérin 29. Les axes 34 d'oscillation et 31 d'articulation sont des axes de pivotement transversaux. L'avant-bras 33 porte à son extrémité un autre axe transversal portant un moyen de prise constitué par une poutre 36 ayant sensiblement la longueur de la remorque et celle du couloir auxquels elle est parallèle. Grâce à un culbuteur 37 articulé sur l'axe 31 et grâce à des tringles 38 et 39 se relayant sur ce culbuteur 37 toutes les liaisons dans le bras 30 et la liaison à la poutre 36 sont des liaisons à parallélogrammes déformables, grâce auxquelles la poutre 36 reste, en toutes circonstances, parallèle à elle-même, c'est-à-dire à la remorque et au couloir. La poutre 36 comporte des griffes pivotantes 40 commandées par un vérin 41, pour constituer organe de prise des bottes par les ficelles de liage, comme il est connu en soi.

Le mode d'utilisation est très facile. Le véhicule servant de véhicule de ramassage, équipé comme il a été exposé, se déplace dans le champ ou la prairie, où il doit ramasser les bottes déposées par une presse lieuse, en suivant les alignements existants ou faits à la main. Le conducteur dirige le véhicule de sorte que l'entrée du couloir se dirige sur les bottes, qui s'engagent sans difficulté dans son ouverture évasée. Les barres 6 constituent glissières pour chaque botte entrée jusqu'à ce que celle-ci vienne buter sur la butée d'arrêt 9 ou sur une précédente botte déjà en butée. La machine avance en faisant glisser sur le sol les bottes en butée. Lorsque le couloir est plein, le conducteur ou un aide vient saisir la totalité des bottes engagées dans le couloir en commandant de façon appropriée par un poste centralisé 42 à distributeurs les vérins 24, 29 et 41. La position de la grue est alors, pour la flèche, la position 20' représentée à la figure 2 et, pour le bras, un peu plus basse que la position 30' de la figure 1. Toute la rangée ainsi saisie est levée par la grue 20 et déposée sur le plateau 4 en passant par dessus la ridelle ou échelette 28 de hauteur limitée à cet effect. On peut poser sur le plateau 4 autant de rangées longitudinales qu'il en peut contenir d'une ridelle à l'autre, soit jusqu'à la position 20" de la figure 2, après quoi on empile à volonté les rangées les unes sur les autres jusqu'à remplissage.

Pour décharger, l'opération est exactement la même conduite en sens inverse.

On a vu par la description qui précède l'extrême simplicité mécanique du dispositif de l'invention, utilisable sur tout véhicule existant. En dehors des périodes d'utilisation, il suffit de démonter ou d'escamoter le couloir. La grue peut alors recevoir tout autre moyen de prise que la poutre adaptée au ramassage des bottes ou être facilement déposée, si on n'en a pas l'usage.

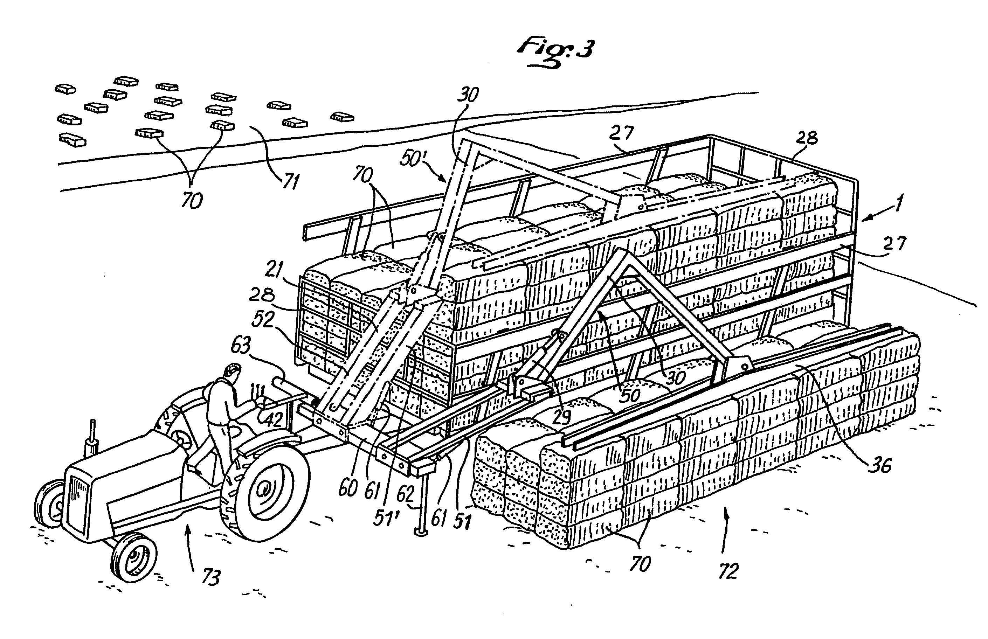

A la figure 3, on a représenté une variante, qui diffère de l'ensemble précédent par le mode de déplacement de la grue 5C, dont la flèche 51 peut, d'une part se déplacer transversalement par coulissement sur un support horizontal 60 à l'aide d'un vérin 63 et peut, d'autre part, s'incliner en direction du chargement grâce à un vérin 61. Dans ce mode de réalisation la flèche est constituée par deux montants 52 assemblés rigidement.

L'extrémité de la flèche porte à sa partie supérieure un bras 30 comportant exactement les mêmes éléments et accessoires qu'aux figures 1 et 2 et qu'il n'est donc pas besoin de décrire. Le support horizontal 60 comporte une béquille escamotable 62 à son extrémité. Sur la figure 3, le couloir 5 est en position escamotée sous le plateau de la remorque et il n'a pas été représenté pour simplifier la figure. La remorque 1 de la figure 3 est représentée comme ayant été tractée par un tracteur 73 pour ramasser des bottes de paille 70 dans un champ 71. Après chargement dans la remorque, les bottes 70 peuvent être déchargées en un tas 72 en les saisissant rang par rang dans la remorque, puis en les déposant comme représenté. Bien entendu, il sera facile de les reprendre ultérieurement rang par rang pour les recharger de même dans la remorque, en manoeuvrant la grue entre sa position 50 représentée en trait plein et sa position 50' en trait interrompu.

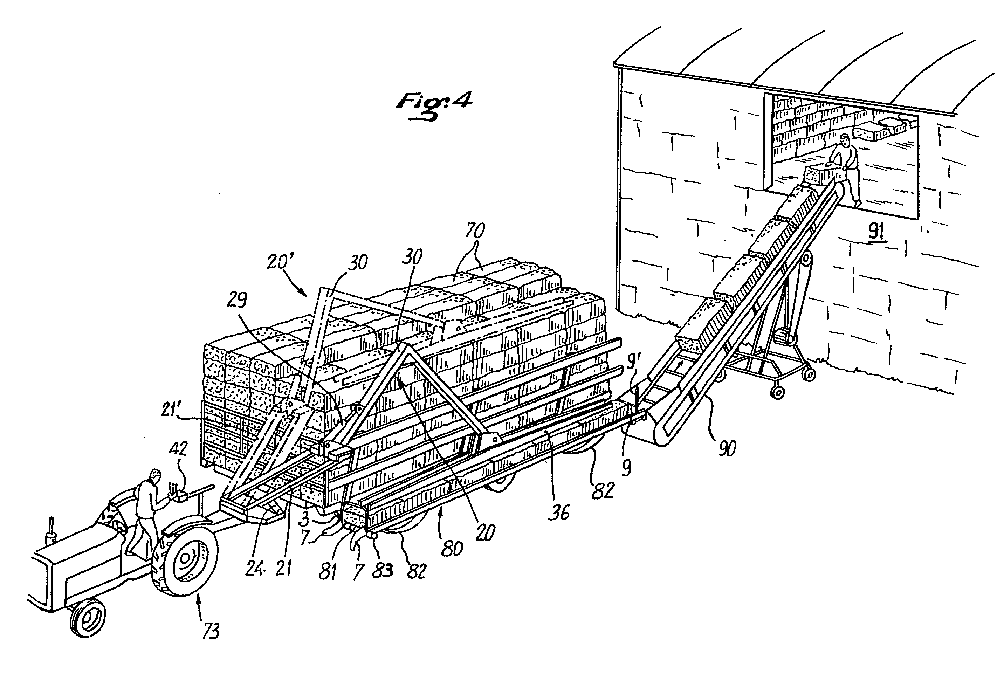

A la figure 4, la grue est de même type que celle des figures 1 et 2, c'est-à-dire à flèche 21 à parallélogramme déformable. Mais le couloir n'est plus un simple couloir à glissières. Il est constitué par un véritable transporteur longitudinal 80, à courroies sans fin 81 entraînées par un moteur 83, et muni à l'avant, sens de circulation de la remorque, de deux sabots 7 constituant ouverture évasée et, à l'arrière, d'une butée 9 escamotable par relèvement en 9'. Le couloir 5, qui peut être escamotable ou non, peut être réglé en hauteur, soit par chaînes, comme aux figures 1 et 2, soit par vérin, de façon à prendre au choix une position basse de ramassage par trainage sur des patins 82, et une position légèrement relevée, telle que représentée à la figure 4. Dans la position basse, on peut ramasser au sol des bottes de paille, exactement comme avec le couloir 5 des figures 1 et 2, en les dirigeant avec les sabots 7 sur le transporteur 80 où elles sont arrêtées par la butée en position basse 9. Une fois la remorque remplie, on l'amène par son tracteur 73 à proximité d'un point d'utilisation ou de reprise, tel qu'un convoyeur ou élevateur 90 fixe ou mobile. On peut alors décharger la remorque par rangs entiers de bottes 70 qu'on dépose sur le convoyeur 80 légèrement relevé, la butée étant en position relevée 9'. Le convoyeur 80, mis en marche par le moteur 83, peut alors déverser les bottes au point de réception du convoyeur 90, qui peut délivrer les bottes à un bâtiment 91, comme représenté à la figure 4, mais peut les délivrer à tout autre poste pour une application quelconque, telle qu'alimentation du bétail ou d'une chaudière à paille.

On remarquera que, pour une dimension donnée de botte, on obtient un rangement affectant à chaque botte une position discrète. Chaque rang de bottes peut donc se définir par deux coordonnées. Si toutes les commandes sont hydrauliques, le circuit hydraulique peut comporter, comme il est connu en soi, un dispositif de mesure de pression associé à chaque vérin, un tel dispositif servant alors de dispositif de détection de résistance subie par l'organe commandé par le vérin associé, c'est-à-dire de son état de contact ou non avec un rang de bottes. Par un adressage convenable des x largeurs de rangées et des y hauteurs de rangées, on peut programmer le chargement et/ou le déchargement de l'ensemble véhiculé. Cette programmation pourra être par exemple une séquence de chargement ou de déchargement du véhicule dans un ordre donné avec ou sans séquence identique pour la mise en tas ou la reprise au tas. Si on prend soin d'ajouter un ou des détecteurs de présence sur le couloir, on pourra aisément obtenir une opération automatique de chargement du véhicule par un rang complet de bottes ramassé par le couloir. Inversement, et notamment dans le cas illustré par la figure 4, on pourra provoquer l'alimentation automatique, avec ou sans conditions de temps, du transporteur lorsque celui-ci a évacué tout le rang précédent dont il avait été chargé. Mais ces automatismes n'excluent pas une commande par opérateur à partir d'un poste centralisé 42, comme représenté sur les figures.

**Revendications**

1. Dispositif de ramassage, de chargement, de déchargement de bottes (70) de paille ou de fourrage combinant un véhicule (1) ayant un châssis (2), un couloir (5) réuni au châssis (2) pour s'étendre parallèlement au véhicule (1) sur la longueur de celui-ci, ce couloir (5) comprenant des barres longitudinales (6) et une butée arrière (9) qui limitent une entrée libre évasée et une ouverture supérieure libre par le haut, un moyen de chargement dans le véhicule (1) des bottes contenues dans le couloir (5) caractérisé en ce que le moyen de chargement est une grue (20) supportée par le châssis (2) et ayant un moyen de saisie (36) apte à saisir un rang complet de bottes (70) occupant la longueur de couloir (5) pour le charger dans le véhicule ou un rang longitudinal complet de bottes (70) situées dans le véhicule pour le décharger de ce dernier, cette grue (20) étant à flèche (21) inclinable en sens transversal et en sens longitudinal par rapport au véhicule (1) pour maintenir le moyen de saisie (36) parallèlement à lui-même pendant ses déplacements.

2. Dispositif selon la revendication 1 caractérisé en ce que le couloir (5) a un fond comprenant sur toute sa longueur un transporteur longitudinal sans fin (80) entraîné par un moteur (83) en direction de l'arrière, la butée arrière (9) étant alors escamotable ou amovible.

3. Dispositif selon la revendication 2 caractérisé en ce que le couloir (5) est supporté par le châssis (2) par un moyen (11) permettant un réglage de position dans le sens de la hauteur par rapport au sol.

4. Dispositif selon la revendication 1 caractérisé en ce que la grue (20) est supportée par le châssis (2) au moyen d'un support transversal (60) permettant son déplacement en sens transversal.

5. Dispositif selon la revendication 4 caractérisé en ce que le support transversal (60) se termine du côté du couloir (5) par une extrémité munie d'une béquille escamotable (62).

6. Dispositif selon la revendication 1 caractérisé en ce que le moyen de saisie (36) est équipé d'un ensemble de griffes pivotantes (40) commandées par au moins un vérin (41) poure prendre les bottes (70) par leurs liens.

7. Dispositif selon la revendication 1 caractérisé en ce qu'il est équipé de moyens de programmation du chargement du véhicule (1) à partir du couloir (5) ou de déchargement du véhicule (1) dans le couloir (5) par rangs successifs de bottes (70).

## Patentansprüche

1. Sammel-, Lade- und Entladegerät für Stroh- der Futterballen (70), welches einen Wagen (1) mit einem Chassis (2), einen mit dem Chassis (2) verbundenen Gangbereich (5) der sich über die Länge des Wagens 1 parallel zu diesem erstreckt, wobei der Gangbereich (5) Längsstäbe (6) und einen hinteren Anschlag (9) aufweist, die einen weiten freien Eintritt und eine nach oben offene Öffnung begrenzen, sowie eine Ladeeinrichtung zum Beladen des Wagens (1) mit den im Gangbereich (5) liegenden Futterballen vereinigt, dadurch gekennzeichnet, dass die Ladeeinrichtung ein Kran (20) ist, welcher vom Chassis (2) getragen wird und welcher eine Greifereinrichtung (36) aufweist, die eine vollständige Reihe der Ballen (70) erfassen kann, welche die Länge des Gangbereiches (5) ausfüllt, um sie auf das Fahrzeug zu laden oder eine vollständige Reihe von Ballen (70), die auf dem Fahrzeug liegen, um sie von letzterem zu entladen, und dass der Kran (20) einen Ausleger (21) enthält, der in Querrichtung und Längsrichtung gegenüber dem Fahrzeug (1) verschwenkbar ist, um während dieser Schwenkbewegungen die Greifereinrichtung parallel zum Wagen zu halten.

2. Gerät nach Anspruch 1, dadurch gekennzeichnet, dass der Gangbereich (5) einen Boden aufweist, welcher übe seine gesamte Länge einen endlosen Längsförderer (80) enthält, der durch einen Motor (83) in Richtung von hinten angetrieben wird, wobei der hintere Anschlag (9) dabei einziebar oder absetzbar ist.

3. Gerät nach Anspruch 2, dadurch gekennzeichnet, dass der Gangbereich (5) durch das Chassis (2) über eine Einrichtung (11) getragen wird, welche eine Positionseinstellung der Höhe gegenüber dem Boden gestattet.

4. Gerät nach Anspruch 1, dadurch gekennzeichnet, dass der Kran (20) vom Chassis (2) mittels eines Querträgers (60) getragen wird, welcher seine Verschiebung in Querrichtung gestattet.

5. Gerät nach Anspruch 4, dadurch gekennzeichnet, dass der Querträger (60) an der Seite des Gangbereiches (5) einen Endabschnitt aufweist, der mit einer einziebaren Abstützung (62) ausgestattet ist.

6. Gerät nach Anspruch 1, dadurch gekennzeichnet, dass die Greifereinrichtung (36) mit einer Anordnung schwenkbarer Greifer (40) ausgestattet ist, die durch mindestens einen Betätigungszylinder (41) gesteuert werden, um die Ballen (70) an ihren Bindungen zu erfassen.

7. Gerät nach Anspruch 1, gekennzeichnet, durch eine Programmiereinrichtung für das Laden des Wagens (1), ausgehend vom Gangbereich (5), oder für das Entladen des Wagens (1) in den Gangbereich (5) in aufeinanderfolgenden Ballenreihen (70).

## Claims

1. A device for collecting, loading and unloading bales (70) of straw or fodder, which combines a vehicle (1) having a frame (2), a gangway (5) joined to the frame (2) in order to extend in parallel with the vehicle (1) along its length, this gangway (5) comprising longitudinal bars (6) and a rear stop (9) which bound a flared free entry and a top opening which is free upwards, and a means of loading into the vehicle (1) bales contained in the gangway (5), characterized in that the means of loading is a crane (20) supported by the frame (2) and having seizure means (36) suitable for seizing a complete row of bales (70) occupying the length of the gangway (5) in order to load it into the vehicle or a complete longitudinal row of bales (70) situated in the vehicle in order to unload it from the latter, this crane (20) having a boom (21) which can be inclined in the direction transverse to and in the direction longitudinal to the vehicle (1) in order to keep the seizure means (36) parallel with itself during its movements.

2. A device as in Claim 1, characterized in that the gangway (5) has a bottom comprising along the whole length of it a longitudinal endless conveyor (80) driven by a motor (83) in the direction towards the rear, the rear stop (9) being then retractable or removable.

3. A device as in Claim 2, characterized in that the gangway (5) is supported by the frame (2) by means (11) which enable adjustment of its position in the sense of its height with respect to the ground.

4. A device as in Claim 1, characterized in that the crane (20) is supported by the frame (2) by means of a transverse support (60) which enables movement of it in the transverse direction.

5. A device as in Claim 4, characterized in that the transverse support (60) terminates next the gangway (5) in an end equipped with a retractable prop (62).

6. A device as in Claim 1, characterized in that the seizure means (36) is equipped with a group of pivoting claws (40) controlled by at least one jack (41) in order to catch the bales (70) by their ties.

7. A device as in Claim 1, characterized in that it is equipped with means of programming the loading of the vehicle (1) from the gangway (5) or unloading of the vehicle (1) into the gangway (5) by rows of bales (70) in succession.

*Fig.1*

0 035 923

Fig. 2

Fig.3

*Fig.4*

0 035 923